# EUROPEAN PATENT SPECIFICATION

(11) **EP 0 280 473 B1**
(45) Date of publication and mention of the grant of the patent: **28.09.1994**
(21) Application number: 88301408.6
(22) Date of filing: 19.02.1988
(51) Int. Cl.: G01N 35/06, G01N 1/00

(54) **Sample transfer device**
Probenübertragungsvorrichtung
Dispositif de transfert d'échantillons

(30) Priority: 24.02.1987 GB 8704267
(43) Date of publication of application: 31.08.1988
(73) Proprietor: IBG Systems Limited, Esher Surrey KT10 9QA (GB)
(72) Inventor: Bowley, Alan Reginald, Balloch Inverness Scotland (GB); Burrett, Kenneth Frederick, Epsom Downs Surrey KP17 3PB (GB); Donald, William Kirby, Inverness Scotland (GB); Gordon, Ian, Inverness Scotland (GB); Molloy, James Oscar, Belmont Surrey SM2 6BP (GB); Ross, Derek William, Inverness Scotland (GB)
(74) Representative: Needle, Jacqueline

(56) References cited:
- EP-A- 0 020 875
- FR-A- 2 523 812
- US-A- 3 444 742
- US-A- 4 446 104

## Description

The present invention relates to a transfer apparatus arranged to transfer fluids between a plurality of sites of a first separation and a plurality of sites of a second, different, separation.

Microplates, generally consisting of a plastics moulding containing numerous wells in a rectangular matrix, are widely used in medical laboratories as vessels in which a number of samples can be tested simultaneously.

A fundamental difficulty in designing equipment for transferring samples onto microplate wells is that the wells have a typical small spacing between centres, whilst the samples are initially presented in larger vessels which are spaced further apart because of their size. This is particularly the case with blood samples. A blood sample is collected from a donor unit in a test tube. In order to test the blood sample, it is necessary to transfer a portion of the blood sample to a microplate well. Automatic sample transfer devices are known, eg DE 3621586 and EP 185330, but such devices are limited to using only 1, or at most 2, sample probes. Such devices are large and cumbersome and are unable to transfer a substantially large number of samples at one time.

US-A-3,444,742 describes a transfer apparatus arranged to transfer fluids between a plurality of sites of a first separation and a plurality of sites of a second, different, separation, said apparatus comprising an elongate linear guide member, a plurality of substantially identical supporting elements slidable along said linear guide member to form a linear array of supporting elements, and a plurality of sampling probes for receiving fluid to be transferred each supported by a respective one of said supporting elements, wherein said supporting elements are positionable in a first position in which said supporting elements are generally in abutment and in which the sampling probes have a first, predetermined minimum separation, and wherein said supporting elements are positionable in a second position in which said supporting elements are spaced apart and in which the sampling probes have a second, predetermined maximum separation, and said apparatus further comprising drive means for moving said supporting elements to said first or second position.

This known apparatus is a 'lazy tongs' arrangement capable of supporting sampling probes at a number of different spacings.

FR-A-2523812 describes a device for treating dough having a linear array of elements which can be arranged at different relative spacings.

According to the present invention there is provided a transfer apparatus arranged to transfer fluids between a plurality of sites of a first separation and a plurality of sites of a second, different, separation, said apparatus comprising an elongate linear guide member, a plurality of substantially identical supporting elements slidable along said linear guide member to form a linear array of supporting elements, and a plurality of sampling probes for receiving fluid to be transferred, each said sampling probe being supported by a respective one of said supporting elements, wherein said supporting elements are positionable in a first position in which said supporting elements are generally in abutment and in which the sampling probes have a first, predetermined minimum separation, and wherein said supporting elements are positionable in a second position in which said supporting elements are spaced apart and in which the sampling probes have a second, predetermined maximum separation, and said apparatus further comprising drive means for moving said supporting elements to said first position or to said second position, wherein each said supporting element is a rectangular block, has an external abutment surface formed thereon, and carries an elongate arm which extends away from its external abutment surface and extends generally parallel to the longitudinal extent of said linear guide member, wherein each said elongate arm carries a lip which is spaced by said arm from said abutment surface, and each said supporting element has a shoulder formed thereon which is arranged to be abutted by the lip carried by the arm of an adjacent supporting element with the shoulder of each said supporting element being received in the spacing between the lip and the external abutment surface of the respective adjacent supporting element, the abutment of each said lip with the respective shoulder defining the second position of said supporting elements in which the sampling probes are at the predetermined maximum separation, and wherein each said supporting element is mounted for sliding movement along said guide member by means preventing movement of each said supporting element generally transversely to the longitudinal extent of said linear guide member.

In an embodiment, each said supporting element comprises a member having first and second, spaced, opposed external surfaces, the first said external surface defining said external abutment surface of each said supporting element and being arranged to be generally in abutment with the second external surface of an adjacent supporting element when said supporting elements are in their first position.

Preferably, said second external surface of each said supporting element defines an external abutment surface of the shoulder thereof such that said first position of said supporting elements is defined by the abutment of each said shoulder with the external abutment surface of the respective adjacent supporting element, whilst said second position is defined by the abutment of each said shoulder with the respective lip.

In an embodiment, said means preventing generally transverse movement of said supporting elements comprises at least one aperture extending through each said supporting element in a direction generally parallel to the longitudinal extent of the arm thereof, and wherein said linear guide member comprises at least one elongate guide rail which is arranged to extend through said one aperture of each said supporting element whereby said supporting element are mounted along said guide rail to form said linear array, and such that said supporting elements are slidable along said guide rail.

Preferably, said drive means is arranged to move at least one said supporting element along said guide rail, and wherein said actuating elements are arranged such that movement of one supporting element away from an adjacent supporting element brings the shoulder of said one supporting element into abutment with the lip of the adjacent supporting element and thereby moves the adjacent supporting element.

Said drive means may comprise any suitable means, for example, the drive means may comprise a cord, a chain, a hinged arm, an elastic link, an engaging arm, a spring or a piston.

It will be appreciated that in a transfer apparatus of the invention, the actuating element of one supporting element is arranged to co-operate with an adjacent supporting element. Consequently the size of the actuating element, and in particular, the length of the respective arm determines the maximum separation between adjacent supporting elements. If each supporting element is arranged to carry one sampling probe, the maximum spacing of the said probes is thereby determined. Furthermore, each said arm is arranged to transmit drive to a second supporting element so that continued motion of a first supporting element drives the second supporting element in its turn.

Preferably said supporting elements are slidably mounted on said guide rail. When the supporting elements are slidably mounted they may be made of any material which has low friction properties, eg a plastics material such as polypropylene.

The supporting elements are arranged in a linear array. In an embodiment, the transfer apparatus comprises a plurality of such arrays, eg two. The supporting elements in a first array may be provided with means arranged to co-operate with a second adjacent array of supporting elements. The co-operating means may also be arranged to provide drive to the second array such that movement of the first array of supporting elements causes movement of to the second array of supporting elements. The co-operating means may be eg a cord, a chain, a hinged arm, an elastic link, an engaging arm or a piston. In a preferred embodiment, a supporting element comprises a rib which is arranged to co-operate with one or more supporting elements of a second array.

The present invention is advantageous because it is light and portable.

A further advantage of the transfer apparatus is that it is capable of being operably linked to a computer such that data related to a sample in a sampling probe at a first site may be related to the same sample when moved to a second site. This may be particularly advantageous when handling blood samples. When donations of blood are given a sample is stored in a test tube and each tube is given a digital code, eg a bar code. Such labelling assists in the recordal of data allocated to any given sample. A fundamental problem with such data storage is that there is a risk that when a sample is transferred from a test tube to, for example, a microplate, any two samples may be confused and incorrect data accorded to a sample. Transfer apparatus of the invention enables such errors to be avoided by according a second digital code to each sample. The second code may relate to a position of a sample in a given microplate. Consequently the risk of confusion may be reduced.

Transfer apparatus of the invention is particularly applicable for the transfer of fluids and especially for the transfer of liquids eg blood. However, the transfer device may also be adapted for the transfer of solids. By the term blood we mean normal human or animal blood, serum, haemoglobin or any conventionally used blood products.

The transfer apparatus is particularly suitable for the transfer of small volumes of fluid to a precise depositing site such as the transfer of blood samples in blood grouping or other determinations based on haemoglutination reactions. When used for transferring blood samples, the supporting elements are preferably capable of moving from an open position in which each element is separated by a distance of 13 to 18mm, eg 15mm, from an adjacent supporting element, to a closed position in which the element separation is from 6 to 12, eg 9mm, and vice versa. Such transfer is particularly suited for the transfer of samples from test tubes to microplate wells.

The supporting elements are arranged to move only in one plane with respect to one another, for example, horizontally.

The supporting elements may be biassed apart and the drive means provided to cause the supporting elements to abut or, the supporting elements are biassed together and the drive provided to cause separation of the supporting elements. When two arrays of supporting elements are provided drive may be applied to one or both of the arrays.

The number of supporting elements may vary according to the particular use to which the apparatus is to be put. For use in the transfer of blood we prefer the number of supporting elements to be of from 2 to 24, preferably from 6 to 16 and most preferably from 8 to 12.

Each supporting element may carry a plurality of sampling probes, however we prefer each supporting element only to carry two probes and more preferably only one probe.

The cycle of fluid transfer is faster when comparing the present invention to known sampling techniques. In particular, the cycle may be quickened by use of the fluid transfer device in conjunction with a peristaltic pump eg a compressed air peristaltic pump such as that described in European Patent Application, Publication No. 0242077.

It is a further feature of the invention to provide an individual supporting element adapted for use in a sample transfer device as hereinbefore described.

A preferred embodiment of the invention will hereinafter be described, by way of example only, and with reference to the accompanying drawings in which:-
Figures 1 and 2 show perspective views of a single supporting element,
Figure 3 is a plan view showing three supporting elements in an abutted position,
Figure 4 shows a plan view of a series of supporting elements in the closed position,
Figure 5 is a plan view of a series of supporting elements in an intermediate position, and
Figure 6 is a plan view of a series of supporting elements in the open position.

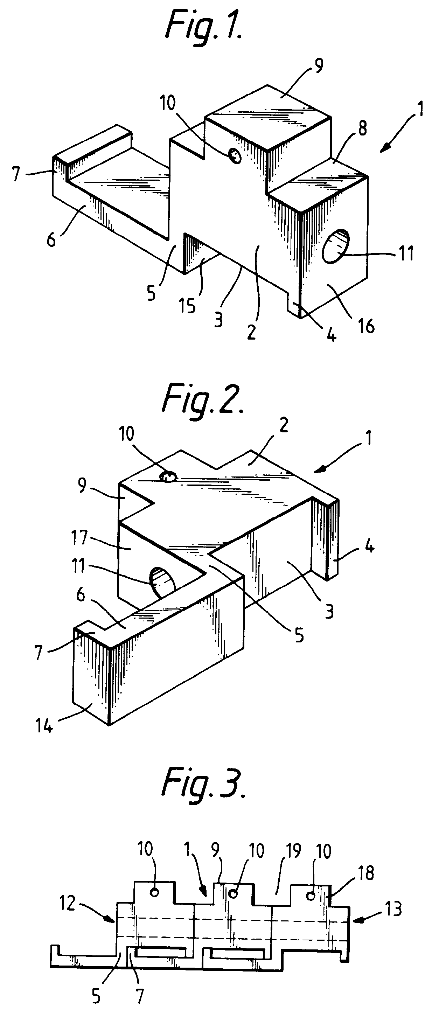

Figures 1 and 2 show a supporting element 1 which comprises a rectangular block 2 provided on a face 3 with a pair of shoulders 4 and 5. One shoulder 5 is provided with an extending arm 6 perpendicular to the shoulder 5, and the arm 6 is provided with a terminal lip 7 forming an actuating element. On the face 8 opposite the shoulders 4 and 5, the block 2 is provided with an external rib 9, which rib 9 is parallel with and mid-way between the shoulders 4 and 5 and includes a longitudinal aperture 10 for supporting a sample probe (not shown). The body of the block 2 is also provided with an aperture 11 which is perpendicular to aperture 10.

As can be seen in Figure 3, when a supporting element 1 is abutted to two adjacent supporting elements 12 and 13, the external surface 14 of the lip 7 engages with the internal surface 15 of the shoulder 5 of the adjacent supporting element 12. In a similar fashion, the external surface 16 of the shoulder 4 engages with the external surface 17 of the shoulder 5 of the second adjacent supporting element 13.

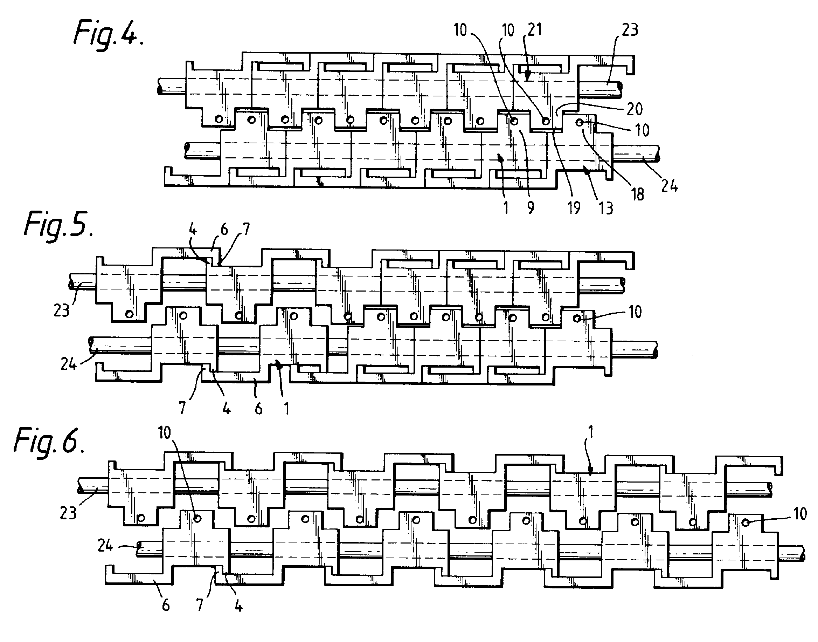

As can be seen in Figures 4, 5 and 6, two arrays of supporting elements 1 may be slidably mounted on two linear guide members in the form of rails 23 and 24 by means of the apertures 11 such that when the supporting elements 1, 13 of the first array are abutted, the two adjacent ribs 9 and 18 co-operate to provide a recessed portion 19 between the ribs 9, 18. The width of the block 2 and the rib 9 is such that the recess 19 is of appropriate dimensions to locate the rib 20 of a facing supporting element 21 of a second array. The width of the block 2 and the rib 9 determine the separation of two adjacent apertures 10 when the supporting elements 1 are in the closed position.

Drive is applied to the two outermost supporting elements at one end of each array and the two outermost supporting elements are moved from a first separation relative to the other supporting elements to a second separation. When the maximum separation is reached, the shoulder 4 engages with the lip 7 of the arm 6 of an adjacent supporting element and the drive is transmitted to that supporting element.

The drive continues until all of the supporting elements are at their maximum separation as determined by the length of the arm 6.

A sample may be taken from an array of sites of a first separation. The arrays of supporting elements may then be driven to a second separation and moved to a depositing site. The samples may then be deposited at an array of sites of a second separation.

## Claims

1. A transfer apparatus arranged to transfer fluids between a plurality of sites of a first separation and a plurality of sites of a second, different, separation, said apparatus comprising an elongate linear guide member (23, 24), a plurality of substantially identical supporting elements (1, 13, 21) slidable along said linear guide member (23, 24) to form a linear array of supporting elements, and a plurality of sampling probes for receiving fluid to be transferred, each said sampling probe being supported by a respective one of said supporting elements, wherein said supporting elements (1, 13, 21) are positionable in a first position in which said supporting elements are generally in abutment and in which the sampling probes have a first, predetermined minimum separation, and wherein said supporting elements (1, 13, 21) are positionable in a second position in which said supporting elements are spaced apart and in which the sampling probes have a second, predetermined maximum separation, and said apparatus further comprising drive means for moving said supporting elements to said first position or to said second position, wherein each said supporting element (1, 13, 21) is a rectangular block, has an external abutment surface (17) formed thereon, and carries an elongate arm (6) which extends away from its external abutment surface (17) and extends generally parallel to the longitudinal extent of said linear guide member (23, 24), wherein each said elongate arm (6) carries a lip (7) which is spaced by said arm from said abutment surface (17), and each said supporting element (1, 13, 21) has a shoulder (4) formed thereon which is arranged to be abutted by the lip (7) carried by the arm (6) of an adjacent supporting element with the shoulder (4) of each said supporting element being received in the spacing between the lip (7) and the external abutment surface (17) of the respective adjacent supporting element, the abutment of each said lip (7) with the respective shoulder (4) defining the second position of said supporting elements in which the sampling probes are at the predetermined maximum separation, and wherein each said supporting element (1, 13, 21) is mounted for sliding movement along said guide member (23, 24) by means (11) preventing movement of each said supporting element generally transversely to the longitudinal extent of said linear guide member (23, 24).

2. A transfer apparatus as claimed in Claim 1, wherein each said supporting element comprises a member (2) having first and second, spaced, opposed external surfaces (16, 17), the first said external surface (17) defining said external abutment surface of each said supporting element and being arranged to be generally in abutment with the second external surface (16) of an adjacent supporting element when said supporting elements are in their first position.

3. A transfer apparatus as claimed in Claim 2, wherein said second external surface (16) of each said supporting element defines an external abutment surface of the shoulder (4) thereof such that said first position of said supporting elements is defined by the abutment of each said shoulder (4) with the external abutment surface (17) of the respective adjacent supporting element, whilst said second position is defined by the abutment of each said shoulder (4) with the respective lip (7).

4. A transfer apparatus as claimed in any preceding claim, wherein said means (11) preventing generally transverse movement of said supporting elements comprises at least one aperture (11) extending through each said supporting element in a direction generally parallel to the longitudinal extent of the arm (6) thereof, and wherein said linear guide member comprises at least one elongate guide rail (23, 24) which is arranged to extend through said one aperture (11) of each said supporting element whereby said supporting element are mounted along said guide rail to form said linear array, and such that said supporting elements are slidable along said guide rail.

5. A transfer apparatus as claimed in Claim 4, wherein said drive means is arranged to move at least one said supporting element along said guide rail, and wherein said actuating elements are arranged such that movement of one supporting element away from an adjacent supporting element brings the shoulder (4) of said one supporting element into abutment with the lip (7) of the adjacent supporting element and thereby moves the adjacent supporting element.

6. A transfer apparatus as claimed in any preceding claim, comprising a plurality of arrays of supporting elements (1, 13, 21), wherein each said array is linear and is provided with means arranged to co-operate with an adjacent array of supporting elements.

7. A transfer apparatus as claimed in any preceding claim, wherein the transfer apparatus is operably linked to a computer such that data related to a sample in a sampling probe at a first site may be related to the same sample when moved to a second site.

## Patentansprüche

1. Übertragungsvorrichtung zur Übertragung von Flüssigkeiten zwischen einer Mehrzahl von Orten mit einem ersten Abstand zueinander und einer Mehrzahl von Orten mit einem zweiten, von dem ersten verschiedenen Abstand zueinander, wobei die Vorrichtung ein längliches, geradliniges Führungsteil (23, 24), eine Mehrzahl von im wesentlichen identischen Trägerelementen (1, 13, 21), welche verschiebbar entlang des geradlinigen Führungsteils (23, 24) sind, um eine Reihenanordnung von Trägerelementen zu bilden, und eine Mehrzahl von Proben-Sensoren zur Aufnahme der zu übertragenden Flüssigkeit aufweist, wobei jeder Proben-Sensor von jeweils einem der Trägerelemente getragen wird, wobei die Trägerelemente (1, 13, 21) in eine erste Position positionierbar sind, in der die Trägerelemente im wesentlichen in Berührung miteinander sind und in der die Proben-Sensoren einen ersten, vorgegebenen, minimalen Abstand zueinander haben, und wobei die Trägerelemente (1, 13, 21) in eine zweite Position positionierbar sind, in der die Trägerelemente Abstand voneinander haben und in der die Proben-Sensoren einen zweiten, vorgegebenen, maximalen Abstand zueinander haben, und wobei die Vorrichtung weiter Antriebsmittel zum Bewegen der Trägerelemente in die erste Position oder in die zweite Position aufweist, wobei jedes der Trägerelemente (1, 13, 21) ein rechteckiger Block ist, der eine äußere daran gebildete Berührungsfläche (17) aufweist, und der einen länglichen Arm (6) trägt, welcher von seiner äußeren Berührungsfläche (17) weg verläuft und im wesentlichen parallel zur Längsausdehnung des geradlinigen Führungsteils (23, 24) verläuft, wobei jeder längliche Arm (6) einen Vorsprung (7) trägt, welcher durch den Arm beanstandet zu der Berührungsfläche (17) liegt, und wobei jedes Trägerelement (1, 13, 21) eine Schulter (4) aufweist, die daran in der Weise ausgebildet ist, um durch den von dem Arm (6) eines benachbarten Trägerelements getragenen Vorsprung (7) berührt zu werden, wobei die Schulter (4) jedes Trägerelements in dem Freiraum zwischen dem Vorsprung (7) und der äußeren Berührungsfläche (17) des jeweils benachbarten Trägerelements aufgenommen wird, wobei die Berührung jedes Vorsprungs (7) mit der jeweiligen Schulter (4) die zweite Position der Trägerelemente definiert, in der die Proben-Sensoren sich in dem vorgegebenen, maximalen Abstand befinden, und wobei jedes Trägerelement (1, 13, 21) durch Mittel (11) verschiebbar beweglich entlang des Führungsteils (23, 24) angebracht ist, welche Mittel eine Bewegung jedes Trägerelements im wesentlichen senkrecht zur Längsausdehnung des geradlinigen Führungsteils (23, 24) verhindern.

2. Übertragungsvorrichtung nach Anspruch 1, wobei jedes Trägerelement ein Teil (2) aufweist, das erste und zweite, voneinander in Abstand und einander gegenüberliegende äußere Oberflächen (16, 17) hat, wobei die erste äußere Oberfläche (17) die äußere Berührungsfläche von jedem Trägerelement bildet und dazu ausgebildet ist, um im wesentlichen in Berührung mit der zweiten externen Oberfläche (16) eines benachbarten Trägerelements zu sein, wenn sich die Trägerelemente in ihrer ersten Position befinden.

3. Übertragungsvorrichtung nach Anspruch 2, wobei die zweite äußere Oberfläche (16) von jedem Trägerelement eine äußere Berührungsfläche der Schulter (4) bildet, so daß die erste Position der Trägerelemente durch Berührung von jeder Schulter (4) mit einer äußeren Berührungsfläche (17) des jeweils benachbarten Trägerelements definiert wird, während die zweite Position durch Berührung von jeder Schulter (4) mit dem jeweiligen Vorsprung (7) definiert wird.

4. Übertragungsvorrichtung nach einem der vorhergehenden Ansprüche, wobei die Mittel (11), welche im wesentlichen senkrechte Bewegungen der Trägerelemente verhindern, wenigstens eine durch jedes der Trägerelemente in einer Richtung im wesentlichen parallel zur Längsausdehnung des Armes (6) verlaufende Öffnung (11) aufweisen und wobei das geradlinige Führungsteil wenigstens eine längliche Führungsstange (23, 24) aufweist, die dazu ausgelegt ist, sich durch die eine Öffnung (11) von jedem Trägerelement zu erstrecken, wodurch die Trägerelemente entlang der Führungsstange so angebracht sind, um eine Reihenanordnung zu bilden, und so, daß die Trägerelemente entlang der Führungsstange verschiebbar sind.

5. Übertragungsvorrichtung nach Anspruch 4, wobei das Antriebsmittel dazu ausgelegt ist, wenigstens eines der Trägerelemente entlang der Führungsstange zu bewegen, und wobei die Betätigungselemente dazu ausgelegt sind, daß die Bewegung eines Trägerelementes weg von dem benachbarten Trägerelement die Schulter (4) des einen Trägerelements in Berührung mit dem Vorsprung (7) des benachbarten Trägerelementes bringt und dadurch das benachbarte Trägerelement bewegt.

6. Übertragungsvorrichtung nach einem der vorhergehenden Ansprüche, welche eine Mehrzahl von Anordnungen von Trägerelementen (1, 13, 21) aufweist, wobei jede Anordnung geradlinig ist und mit Mitteln versehen ist, die dazu ausgelegt sind, mit einer benachbarten Anordnung von Trägerelementen zusammenzuwirken.

7. Übertragungsvorrichtung nach einem der vorhergehenden Ansprüche, wobei die Übertragungsvorrichtung betriebsmäßig mit einem Computer so verbunden ist, daß Daten bezüglich einer Probe in einem Proben-Sensor an einem ersten Ort in Beziehung gesetzt werden können mit der gleichen Probe, wenn sie an einen zweiten Ort gebracht ist.

## Revendications

1. Dispositif de transfert, destiné au transfert de liquides entre une multiplicité de sites séparés par un premier écart et une multiplicité de sites séparés par un second écart différent, ce dispositif comprenant un élément allongé de guidage linéaire (23, 24), une multiplicité d'éléments de support (1, 13, 21) pratiquement identiques, pouvant coulisser le long dudit élément de guidage (23, 24) de manière à former une série linéaire d'éléments de support, et une multiplicité de sondes d'échantillonnage pour recevoir le liquide à transférer, chacune desdites sondes d'échantillonnage étant supportée respectivement par un desdits éléments de support, lesdits éléments de support (1, 13, 21) pouvant être placés dans une première position dans laquelle ils sont généralement en contact mutuel et dans laquelle lesdites sondes d'échantillonnage sont séparées par une première distance minimale prédéterminée, lesdits éléments de support (1, 13, 21) pouvant être placés dans une seconde position dans laquelle ils sont espacés mutuellement et dans laquelle les sondes d'échantillonnage sont séparées par une seconde distance maximale prédéterminée, ledit dispositif comprenant en outre des moyens d'entraînement pour placer lesdits éléments de support dans ladite première position ou dans ladite seconde position, chacun desdits éléments de support (1, 13, 21) étant un bloc rectangulaire, sur lequel est formée une surface externe de butée (17), et comportant un bras de forme allongée (6) qui s'étend à partir de sa surface externe de butée (17), dans une direction généralement parallèle à l'étendue longitudinale dudit élément de guidage linéaire (23, 24), ledit bras de forme allongée (6) portant un rebord (7) qui est séparé de ladite surface de butée (17) par une distance correspondant audit bras, et un épaulement (4) étant formé sur chacun desdits éléments de support (1, 13, 21) et étant disposé de sorte que le rebord (7) porté par le bras (6) d'un élément de support voisin vienne buter contre lui, l'épaulement (4) de chaque élément de support étant reçu dans l'intervalle entre le rebord (7) et la surface externe de butée (17) de l'élément de support respectivement voisin, le contact mutuel de chaque rebord (7) et de l'épaulement (4) respectif définissant la seconde position desdits éléments de support dans laquelle les sondes d'échantillonnage sont séparées par la distance maximale prédéterminée, et chacun desdits éléments de support (1, 13, 21) étant monté à glissement le long dudit élément de guidage (23, 24) par des moyens (11) qui empêchent un mouvement de chaque élément de support dans une direction généralement transversale par rapport à l'étendue longitudinale dudit élément de guidage linéaire (23, 24).

2. Dispositif de transfert selon la revendication 1, dans lequel chacun desdits éléments de support comprend une pièce (2) qui présente des première et deuxième surfaces externes, opposées et espacées (16, 17), la première de ces surfaces externes (17) définissant ladite surface externe de butée de chacun desdits éléments de support et étant disposée de façon à être généralement en contact avec la deuxième surface externe (16) d'un élément de support voisin lorsque ces éléments de support sont dans leur première position.

3. Dispositif de transfert selon la revendication 2, dans lequel ladite deuxième surface externe (16) de chacun desdits éléments de support définit une surface externe de butée de l'épaulement (4) de cet élément, de sorte que ladite première position desdits éléments de support soit définie par le contact mutuel de chacun desdits épaulements (4) et de la surface externe de butée (17) de l'élément de support respectivement voisin, tandis que ladite seconde position est définie par le contact mutuel de chacun desdits épaulements (4) et du rebord (7) respectif.

4. Dispositif de transfert selon l'une quelconque des revendications 1 à 3, dans lequel lesdits moyens (11) empêchant généralement le mouvement transversal desdits éléments de support comprennent au moins une ouverture (11) qui traverse chacun desdits éléments de support dans une direction généralement parallèle à l'étendue longitudinale du bras (6) de cet élément, et dans lequel ledit élément de guidage linéaire comprend au moins un rail de guidage allongé (23, 24) qui est agencé de façon à s'étendre à travers ladite ouverture (11) de chacun desdits éléments de support, lesdits éléments de support étant ainsi montés le long dudit rail de guidage pour former ladite série linéaire et lesdits éléments de support pouvant coulisser le long dudit rail de guidage.

5. Dispositif de transfert selon la revendication 4, dans lequel lesdits moyens d'entraînement sont agencés de façon à déplacer au moins un desdits éléments de support le long dudit rail de guidage, et dans lequel lesdits moyens de commande sont agencés de sorte que l'éloignement d'un élément de support par rapport à un élément de support voisin place l'épaulement (4) du premier élément de support au contact du rebord (7) de l'élément de support voisin et, de la sorte, déplace l'élément de support voisin.

6. Dispositif de transfert selon l'une quelconque des revendications 1 à 5, comprenant plusieurs séries d'éléments de support (1, 13, 21), chacune de ces séries étant linéaire et étant munie de moyens agencés de façon à coopérer avec une série voisine d'éléments de support.

7. Dispositif de transfert selon l'une quelconque des revendications 1 à 6, dans lequel ce dispositif est relié fonctionnellement à un ordinateur, de sorte que des données relatives à un échantillon dans une sonde d'échantillonnage dans un premier site puissent être rapportées au même échantillon lorsqu'il a été transféré dans un second site.
